# EUROPEAN PATENT SPECIFICATION

(11) **EP 0 840 276 B1**
(45) Date of publication and mention of the grant of the patent: **16.10.2002**
(21) Application number: 97119122.6
(22) Date of filing: 03.11.1997
(51) Int. Cl.: G09G 5/14

(54) **Window processing in an on screen display system**
Fensterverarbeitung in einem Bildschirmanzeigensystem
Traitement des fenêtres dans un système d'affichage sur écran

(30) Priority: 01.11.1996 US 30107 P
(43) Date of publication of application: 06.05.1998
(73) Proprietor: TEXAS INSTRUMENTS INCORPORATED, Dallas, Texas 75243 (US)
(72) Inventor: Chauvel, Gerard, 300 Ch de la Suquette, 06600 Antibes (FR); Benbassat, Gerard, 06570 St-Paul-de-Vence (FR); Chae, Brian, Plano, TX 75075 (US)
(74) Representative: Holt, Michael

(56) References cited:
- EP-A- 0 276 884
- EP-A- 0 280 582
- EP-A- 0 384 419
- EP-A- 0 601 647
- EP-A- 0 615 223
- EP-A- 0 724 249
- WO-A-86/05910
- WO-A-91/18353
- WO-A-97/16788
- US-A- 5 604 514

## Description

### FIELD OF THE INVENTION

This invention relates to an on-screen display system with variable resolution.

### BACKGROUND OF THE INVENTION

Current OSD systems may employ multiple central processing units (CPUs) in order to successfully deal with and handle high speed digital bit streams, such as those associated with a digital television set-top box. Each such CPU requires at least its own working memory space. These systems are expensive and may require expensive high speed memories.

EP0615223 discloses an apparatus for providing pixel data comprising a pixel memory and a window controller providing information indicative of an active window in which the the current pixel is located.

The OSD co-processor of the present invention provides for OSD systems that overcome these and other shortcomings of existing OSD systems.

### SUMMARY OF THE INVENTION

In order to attain the foregoing object, an apparatus and a method for providing pixel data in an on screen display according to the appended claims is provided

### BRIEF DESCRIPTION OF THE DRAWINGS

The present invention will now be further described, by way of example, with reference to the example with reference to the accompanying drawings in which:
Figure 1 depicts a high level architectural diagram of an audio/video decoding system employing an OSD co-processor for displaying an OSD picture;
Figure 2 depicts display modes of an OSD co-processor and their associated memory requirements;
Figure 3 depicts two representative OSD pictures generated by an OSD co-processor;
Figure 4 depicts how a CPU builds windows in a portion of its memory and the windows are used to build a frame in a frame memory which is displayed by an OSD co-processor on a screen display;
Figure 5 depicts a high level architectural block diagram of an OSD co-processor and selected interconnections;
Figure 6 depicts two windows having different color schemes that illustrate how an OSD co-processor displays two overlapped windows;
Figure 7 depicts how a portion of the windows of Figure 6 are stored in a frame memory;
Figure 8 depicts in more detail selected portions of the blocks of Figure 5;
Figure 9 depicts a portion of a window controller of the present invention;
Figure 10 depicts portions of a memory cell and memory logic utilized in a window controller of the OSD coprocessor ;
Figures 11-13 depict the generation, assembly and display of portions of windows depicted in Figures 6 and 7;
Figure 14a depicts representative window transition timings, such as those for Figures 6 and 7; and
Figure 14b depicts representative pixel selection and multiplexer timings for Figure 13.

### DETAILED DESCRIPTION

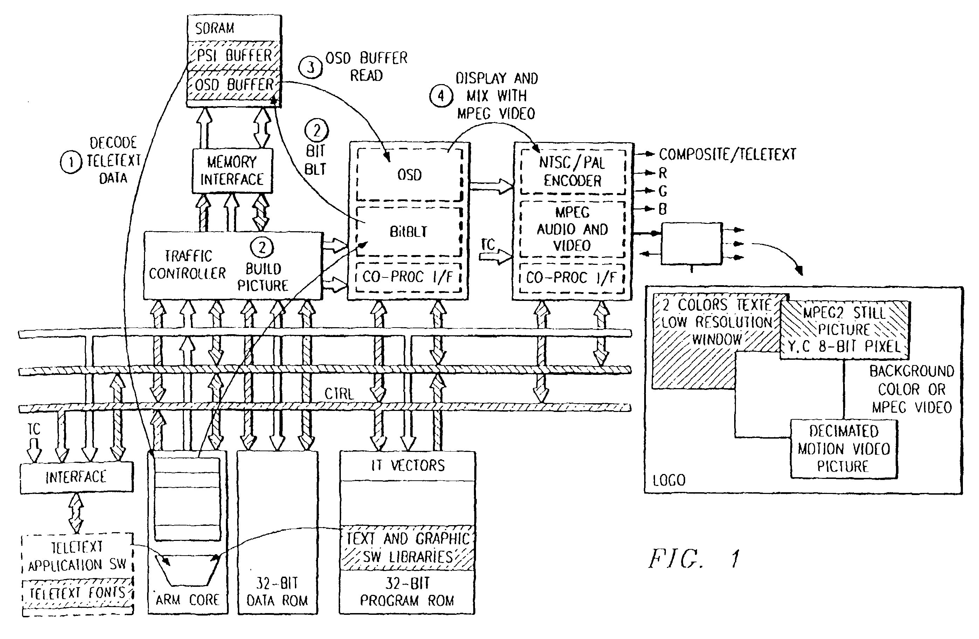

Figure 1 shows the global flow for decoding and displaying an OSD picture. The PSI buffer contains the coded picture, for example: Teletext data to be displayed within an OSD picture. The ARM CPU decodes (1) the Teletext data and builds (2) the OSD picture using a Bitblt hardware accelerator. The OSD controller reads (3) the OSD buffer and generates the OSD video that is mixed with MPEG video (4).

Different modes may be displayed simultaneously on the screen: A bit-map window with 2 colors, a still video picture, a 256 colors graphic window, a decimated motion video picture and a Logo in true color. The OSD coprocessor minimizes the memory required to display service information. The OSD uses a new hardware windowing technique to mix different modes of display such as: bit map with variable resolution, graphics, still video picture and decimated motion video.

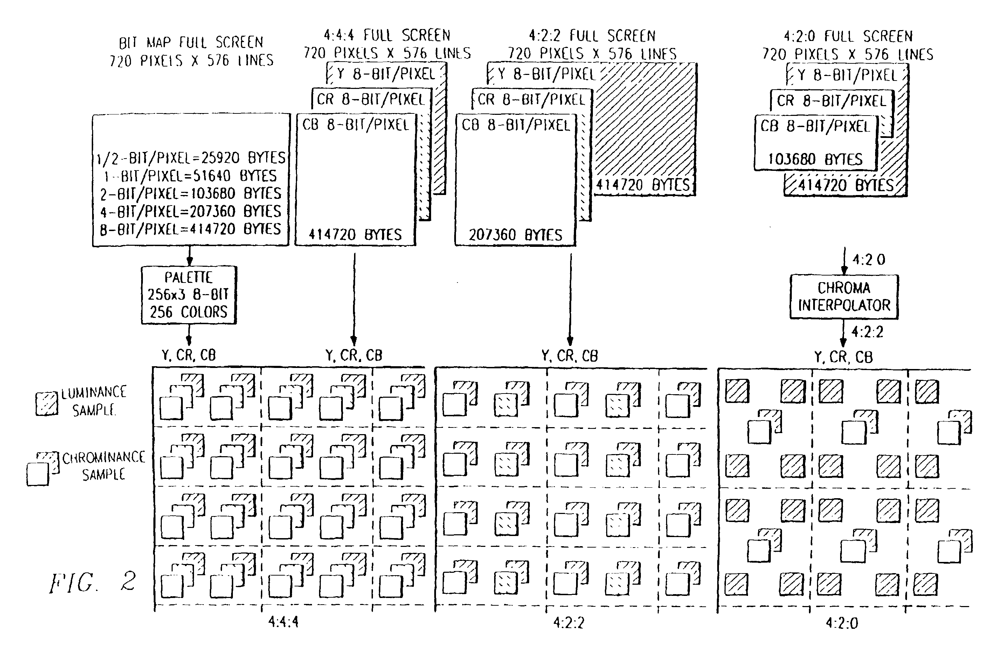

Figure 2 depicts the various modes of display supported by the OSD coprocessor.

More particularly, the OSD co-processor supports:
1) In a bit map the frame buffer contains the code of the color of each pixel to be displayed. The number of bits per pixel defines the number of the colors that can be displayed on screen. Two colors require 1-bit per pixel and 256 colors require 8-bits per pixel. This mode is used to display graphics and text. The code of the color addresses the Color Look Up Table (CLUT) that contains the three color components with 8-bits each.
2) Graphic plane, 4:4:4 mode, uses 8_bits per pixel for each color component R,G,B or Y,Cr,Cb. Each pixel requires 24-bits (16 million colors per pixel).
3) With the 4:2:2 mode the resolution of the chroma is divided horizontally by two. Each pixel has a luminance component Y and alternately a chrominance component Cr or Cb. This mode is used for video still or motion picture. Each pixel requires 16-bit.

With the 4:2:0 mode the resolution of the chroma is divided by two horizontally and vertically. Each pixel has a luminance component Y and a chrominance component Cr and Cb for 4 pixels. This mode is used by the MPEG video decoder to reduce the size of the memory required to store a video motion picture. Each pixel requires 12-bit. The chroma interpolator generates the 4:2:2 output format.

### Current techniques for OSD display:

Table 1 shows the number of bytes required to store a full screen picture 720 pixels x 576 lines in different display modes for an OSD system that does not allow mixing of several modes of display in real time on the same screen. When one part of the screen requires 256 colors, the full screen must be 256 colors even if a part of the screen requires only 2 colors.

**Table 1:**

| Number of byte for full screen display | |
|---|---|
| Display mode | Number of bytes full screen |
| Bit map 1-bit per pixel | 51840 |
| Bit map 2-bit per pixel | 103680 |
| Bit map 4-bit per pixel | 207360 |
| Bit map 8-bit per pixel | 414720 |
| 4:4:4 graphic plane | 1244160 |
| 4:2:2 video mode | 829440 |
| 4:2:0 video mode | 622080 |

However, the present OSD coprocessor can display several modes described above simultaneously on the same screen. Each part of the screen with different display mode uses a windows fully programmable in size, in position and priority level. The windows can be overlapped without limitations. The characteristics of each window are defined by a set of attributes stored into a SRAM. Those attributes are used to calculate the memory address in real time during display and to control the hardware display system.

### Windows on Background Color MPEG Motion Video and Blend Window

| Window size | | Number of bytes | | Window size | | Number of bytes |
|---|---|---|---|---|---|---|
| 90 x 72 | 4:4:4 | 19 440 | | 540 x 504 | 2-bit/pixel | 68 040 |
| 360 x 288 | 1-bit/pixel | 12 960 | | 360 x 144 | 4-bit/pixel | 25 920 |
| 360 x 144 | 4-bit/pixel | 25920 | | | | |
| 180 x 144 | 4:2:2 | 51840 | | | | |
| 720 x 576 | Background | 0 | | | | |
| | Total | 110160 | | | Total | 93 960 |
| | | | | | | |
| 720 x 576 | Full screen 4:4:4 | 1 244 160 | | 720 x 576 | Full screen 4-bit/pixel | 207 360 |

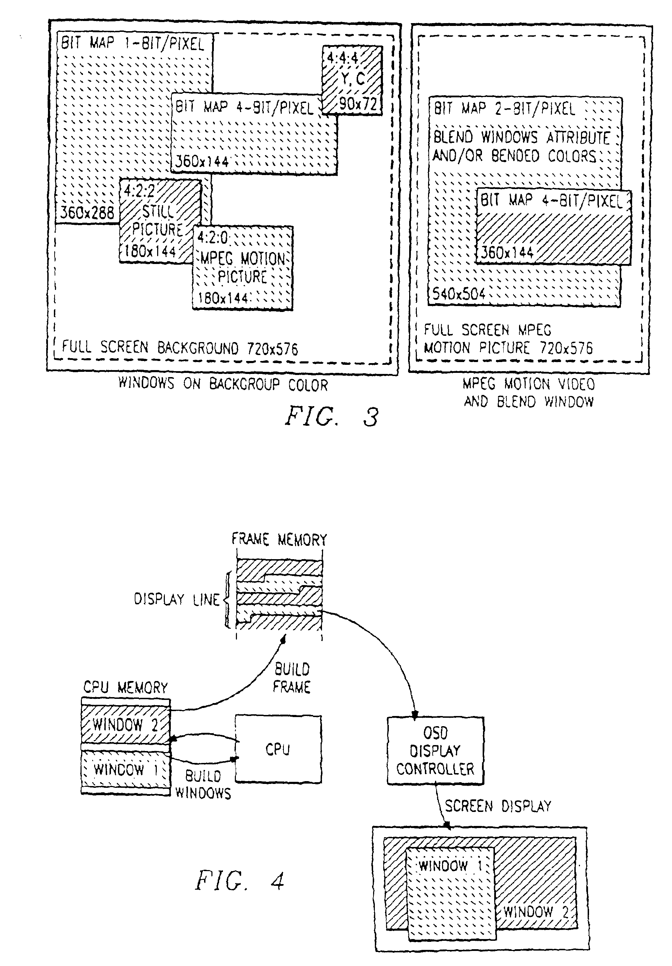

### Example of OSD Picture Memory Requirements for Pictures of Figure 3

Figure 3 shows typical OSD pictures. The left screen is composed of 5 OSD windows with different characteristics displayed on a full screen background color:
a bit-map window 360 pixels by 288 lines with two colors that requires 1-bit per pixel,
a bit-map window 360 pixels by 144 lines with 16 colors that requires 4-bit per pixel,
a graphic window 90 pixels by 72 lines with 16 million colors that requires 24-bit per pixel,
a still video picture window 180 pixels by 144 lines in 4:2:2 format using 24-bit per pixel,
an MPEG motion video window 180 pixels by 144 lines in 4:2:0 format. The window size and position is generated by the OSD system. The MPEG video decoder generates the content of the window by decimation of the full screen picture.

This OSD picture requires 110Kbytes memory. Without the OSD coprocessor the memory could be up to 1.24Meg bytes.

The right screen shows an other picture composed of 2 OSD windows displayed over full screen motion video:
a bit-map window 540 pixels by 504 lines with two colors that requires 1-bit per pixel. The background color is blended over motion video; and
a bit-map window 360 pixels by 144 lines with 16 colors that requires 4-bit per pixel.

The memory size is 93Kbytes with OSD coprocessor compare to 207Kbytes without OSD coprocessor.

### Display flow:

In frame mode (figure 4) CPU and frame use different memory areas. The CPU builds the windows separately into the CPU memory, each window has its own display attributes i.e. display mode, resolution. The new display picture is created by the CPU by copying sequentially each segment of the windows 1 and 2 in such way that the OSD display controller reads the frame memory sequentially and displays line by line from the left upper corner to the right lower corner. The display area that does not contain any OSD data, as background color or motion video, is not described into the frame memory. For each transition of window, each line, the controller changes synchronously the attribute in order to display the window with the corresponding mode. The number of bits to display a pixel of the window 1 and 2 can be different.

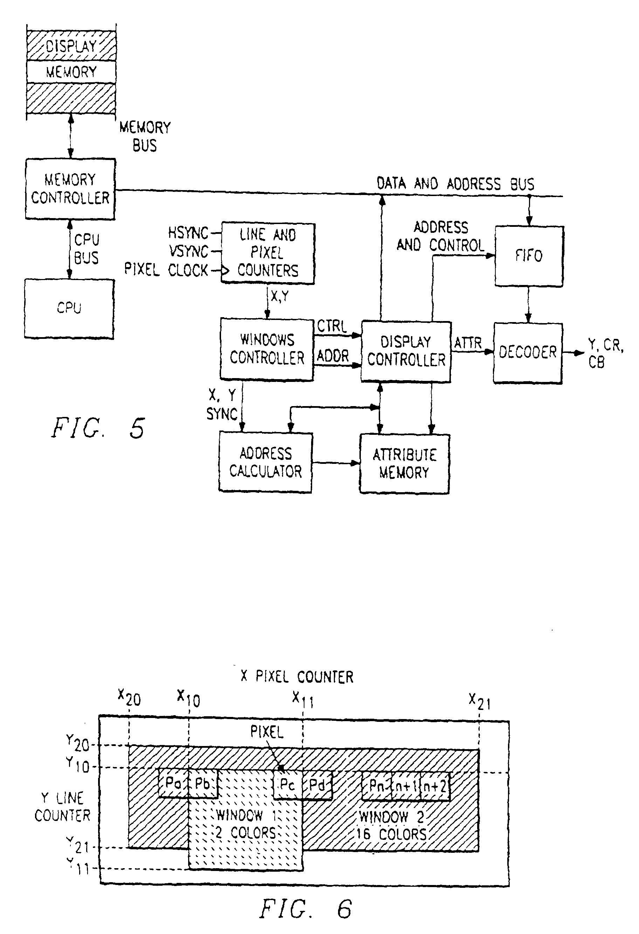

The block diagram of the OSD coprocessor is shown figure 5:
Line counter: The pixel and line counter receives the pixel clock, generate X, Y that represent the pixel position on the screen and synchronization signals Hsyn and Vsync to control the screen display.
Windows Controller: contains the positions X and Y of each windows to be displayed on the screen. The controller compares X, Y position, and indicates to the display controller each window transition and window number.
Address Calculator: Not used in frame mode.
Display controller: For each new window transition the display controller reads the new attribute from the attribute memory. It generates an address for the display memory and load the Fifo with a new block of data. It generates the attribute for the current window to the Decoder.
Decoder: For each pixel the decoder extracts from the Fifo the number of bits corresponding to the current pixel to be displayed. It transforms data bit in pixel.

### Windows attributes:

Display modes: empty window for decimated video. Bitmap, YCrCb 4:4:4 graphics component, YCrCb 4:2:2 CCIR 601 component and background color.

Supports blending of bitmap, YCrCb 4:4:4, or YCrCb 4:2:2 with motion video and with an empty window

Supports window mode and color mode blending

Provides a programmable 256 entries Color Look Up table

Outputs motion video or mixture with OSD in a programmable 422 or 444 digital component format

Provides motion video or mixture with OSD to the on-chip NTSC/PAL encoder

Each hardware window has the following attributes:
window position: any even pixel horizontal position on screen; windows with decimated video have to start from an even numbered video line also
window size: from 2 to 720 pixel wide (even values only) and 1 to 576 lines
window base address
data format: bitmap, YCrCb 4:4:4, YCrCb 4:2:2, and empty
bitmap resolution: 1, 2, 4, and 8 bits per pixel
full or half resolution for bitmap and YCrCb 4:4:4 windows
bitmap color palette base address
blend enable flag
4 or 16 levels of blending
transparency enable flag for YCrCb 4:4:4 and YCrCb 4:2:2
output channel control

### Example of OSD display with 2 windows:

Figure 6 shows an example of display of two overlapped windows. Window 2 on back is a bit map with 16 colors per pixel. Each pixel requires 4-bits into the frame memory to define the code of the color. The window 1 on top is a bit map with 2 colors per pixel. Each pixel requires 1-bits into the frame memory to define the code of the color. The position and dimension of windows 1 is given by the attributes X_10, X_11, Y_10, Y_11. Horizontally the number of pixel is: X_11 - X_10. Vertically the number of lines is: Y_11 - Y_10. Same for window 2 with X_20, X_21, Y_20 and Y_21.

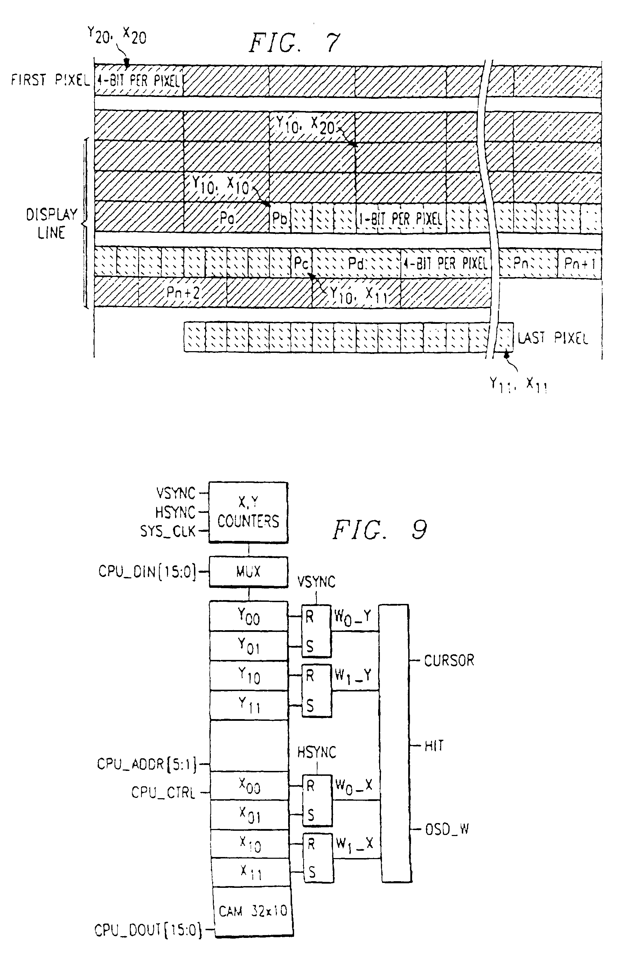

The display controller accesses sequentially the display memory (figure 7) from the first word containing the pixel X_20, Y_20 to the last word containing the pixel X_11, Y_11. Details of the line 20 are shown figure 7. The line begins with pixels of the window 2, window 1 start in X-10, Pa is the last pixel of window 2 with 4-bits per pixel, Pb is the first pixel of window 1 and uses 1-bit per pixel. Window 1 ends on Pc and window 1 restarts in Pd until pixel position X_21.

The same word contains pixels of window 1 and 2. During display the window controller detects the transition between Pa and Pb and controls the data processing algorithm after Fifo access.

### Pixel selector and multiplex:

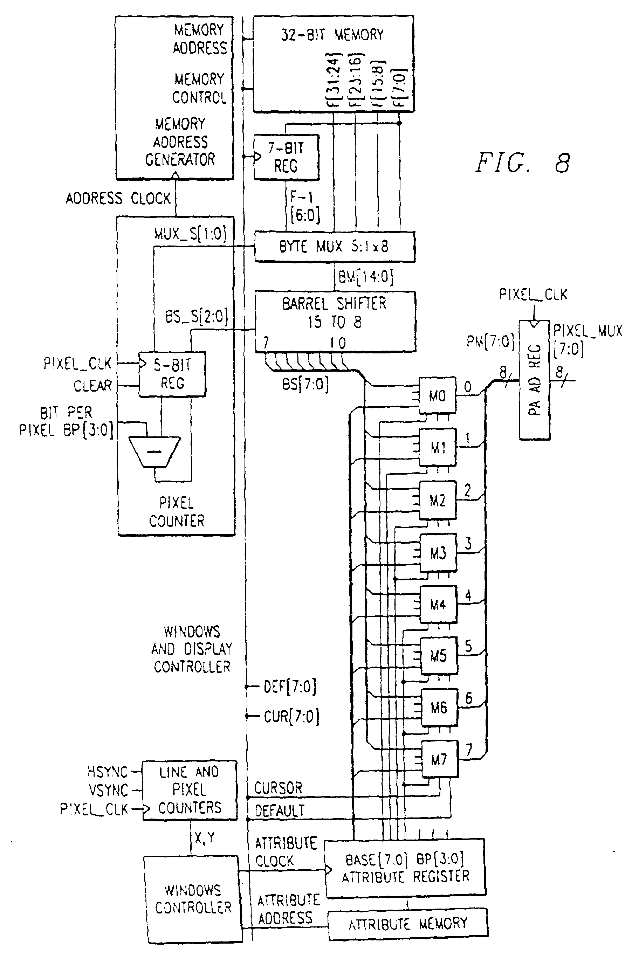

The pixel selector and multiplex is the input of the decoder block shown figure 5. It receives the outputs of the Fifo and the windows attributes and control signals from the display controller. The basic function is to transform data stored into the frame memory in pixel. In case of bit map display (figure 8) the output, Pixel_Mux[7:0] is the address of the CLUT (Color Look Up Table). For graphic or still video picture the output is one color component. Pixel_Mux[7:0] output is produced by bits coming from the Fifo and bits from attribute memory.

### Pixel selector:

Receives 32-bit data from the Fifo outputs F[31:0]. The first stage selects one of the five bytes F[31:24], F23:16], F[15:8], F[7:0] and F[6:0] delayed by one clock sample. The second stage is a half barrel shifter that allows to shift right a 15-bit input data by 0 to 7 position. The output of the barrel shifter positions the LSB of the code of the pixel to be displayed in Bs[0]. The pixel counter provides the control signals for the multiplexer and barrel shifter. Table 2a shows the effect of the control Mux_S[1:0] on the bytes selection and 2b the output of the barrel shifter in function of Bs_S[2:0]. Table 2c combines the table 2a and 2b and shows the bits of the Fifo selected at the output of the barrel shifter in function of the 5_bit pixel counter.

### Multiplexer:

Receives data Bs[7:0] from the barrel shifter and Base[7:0] from the attribute register. It is controlled by 4 control bits coming from the attribute register, Cursor and default signals from display controller as shown in table 2d.

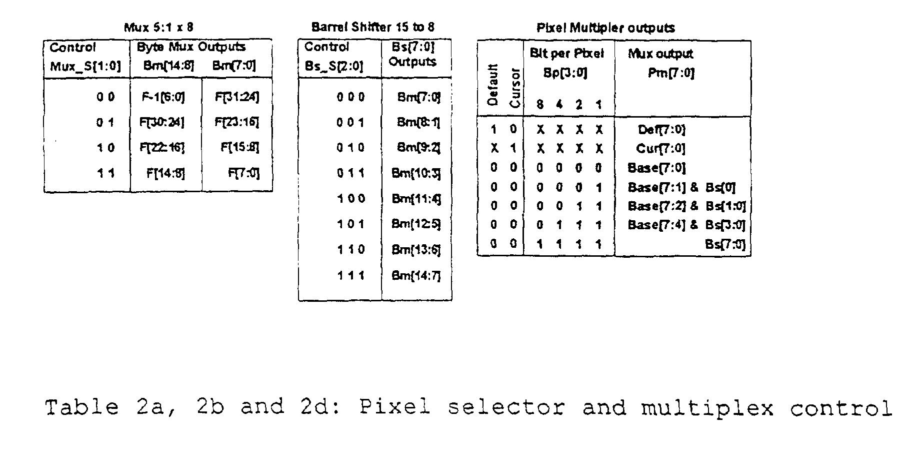

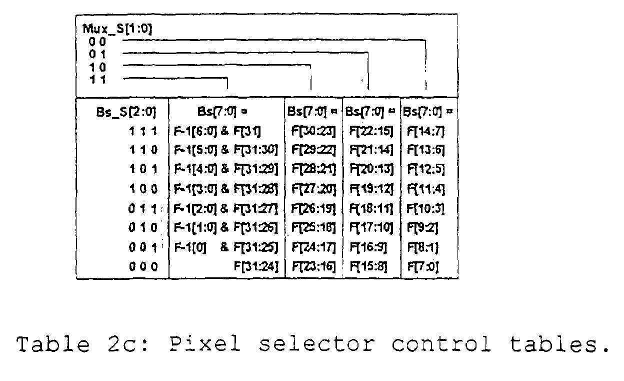

Default: When active Pm[7:0] is equal to the 8-bit default color provided by the general control register of the display controller. No data is read from the Fifo.

Cursor: When active Pm[7:0] is equal to the 8-bit cursor color provided by the general control register of the display controller. No data is read from the Fifo.

Bp[3:0]=0000: The current window is empty and contains 0 bit per pixel or color component. Pm[7:0] is equal to Base[7:0] stored into the attribute register. In bit-map mode the Base [7:0] select one of the 256 colors of the CLUT as a background color.

Bp[3:0]=0001: The current window contains 1_bit per pixel or color component. Pm[7:0] is equal to Base[7:1] concatenated with Bs[0] from the barrel shifter. In bit-map mode the Base[7:1] is the base address of a set of 2_colors of the 256 colors CLUT.

Bp[3:0]=0011: The current window contains 2_bit per pixel or color component. Pm[7:0] is equal to Base[7:2] concatenated with Bs[1:0] from the barrel shifter. In bit-map mode the Base[7:2] is the base address of a set of 4_colors of the 256 colors CLUT.

Bp[3:0]=0111: The current window contains 4_bit per pixel or color component. Pm[7:0] is equal to Base[7:4] concatenated with Bs[3:03] from the barrel shifter. In bit-map mode the Base[7:4] is the base address of a set of 16_colors of the 256 colors CLUT.

Bp[3:0]=1111: The current window contains 8_bit per pixel or color component. Pm[7:0] is equal to Bs[7:0] from the barrel shifter. In bit-map mode the 256 colors CLUT are used.

### Pixel counter:

Provides the control for the pixel selector Mux_S[1:0] concatenated with Bs_S[2:0]. Each beginning of frame the pixel counter is reset. It is decremented by 0, 1, 2, 4 or 8 depending of the current window attribute. Address clock signal is generated when the counter crosses zero.

### Memory address generator:

It generates the read address for the Fifo. Each address clock signal generated by the pixel counter a new 32-bit word F[31:0] is sent to the pixel selector.

### Attribute memory and register:

The attribute memory contains the attributes of the windows to be displayed during the current frame. The attributes that control the pixel selector and multiplexer are:

Display mode: bit-map, graphic, still video or empty.

Number of bit per pixel or color component: 0, 1, 2, 4 or 8 bits.

The bit-map CLUT base address.

The attribute register contains the attribute of the current window. The attribute clock transfers the content of attribute memory to the register when the window change.

### Window controller:

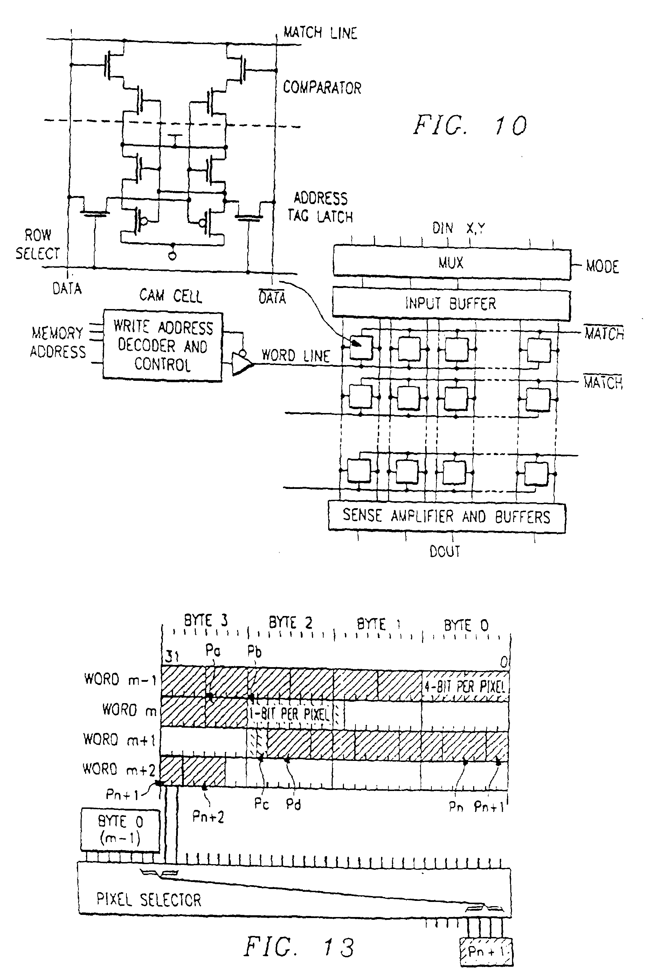

The window controller is composed of a content addressable memory CAM, flip flop and priority encoder. The CAM contains the attributes of position and size of the windows to be displayed on the current frame. The figure 9 shows a 32 words CAM. Each window requires 4 words that indicate horizontally the coordinates of the first and last pixel and vertically the coordinates of the first and last line. A 32_words CAM supports 8 windows.

The CAM compares the value of the pixel and line counters respectively X and Y. When Y counter matches a value Yn0, a new window starts vertically, the corresponding RS flip-flop is set Wn_Y=1. When Y counter matches a value Yn1, the corresponding window ends vertically, RS flip-flop Wn_Y is reset. The process is the same horizontally. Wn_Y and Wn_X are combined to indicate that the X, Y counter is into an active window. The indices "n" indicate the window number. Several windows can be overlapped, the priority encoder indicates the display order on the screen. The indices "n=0" correspond to the cursor that must be always on top. Outputs of priority encoder are hit and OSD_W, Hit generates the attribute clock.and OSD_W the memory attribute address corresponding to the active window.

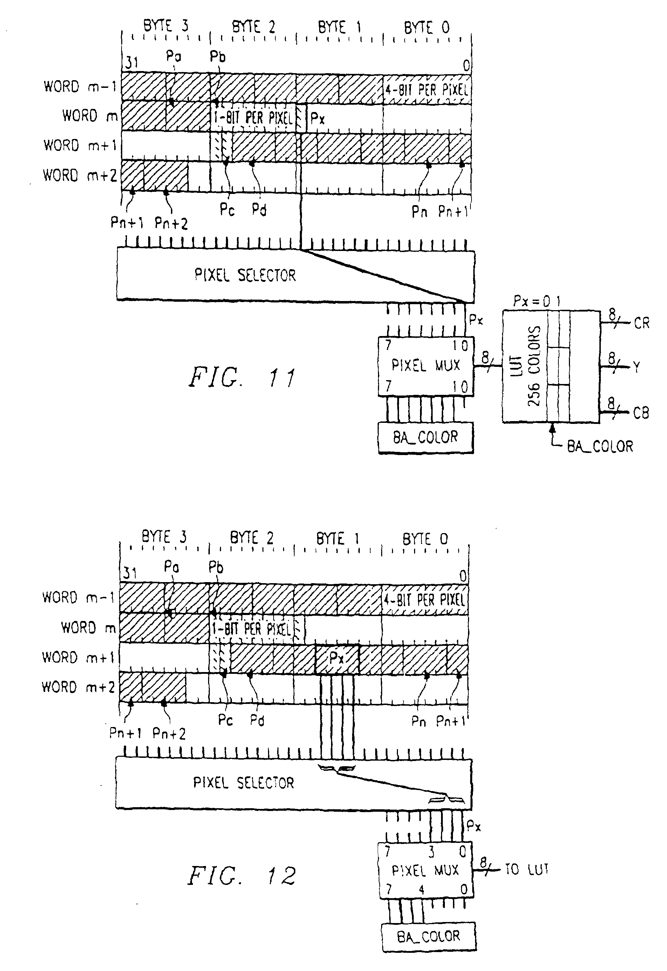

The details of the CAM cell is shown figure 10. The cell contains 2 parts, a 6 Transistors RAM cell and a 4. transistors comparator. The CPU loads the content of the CAM with the attributes of position of the windows, memory mode is selected. During the display the associative mode is selected. The line counter Y and pixel counter X are compared to the content of all Yn and Xn of the CAM. When X or Y is equal to one or several values the corresponding Match lines are active to set or reset a flip-flop.

### Example of pixel generation:

The figures 11, 12 and 13 correspond to the generation of the display and frame memory represented figures 6 and 7.

Figure 11, the pixel Px of the window 1 is selected into the 32_bit word "m". The pixel counter is decrement by one each access. Pixel selector puts Px at the output Bs[0]. The current window attribute select 1_bit per pixel. The pixel multiplex selects Base[7:1] and concatenates with Px to form the output Pixel_Mux[7:0]. In bit-map mode Pixel_Mux[7:0] selects 2 colors of the CLUT. Base[7:1] is the base address of the CLUT.

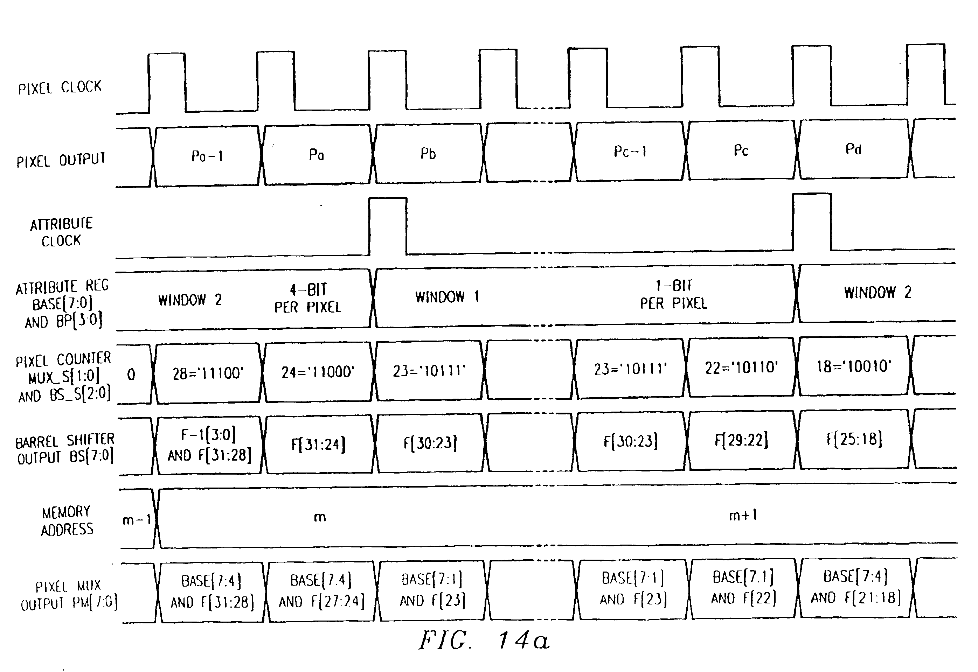

Figure 12 shows the generation of a pixel Px for the window 2 that uses 4_bits per pixel in bit-map mode. Pixel selector puts Px at the output Bs[3:0]. The pixel multiplex selects Base[7:4] and concatenates with Bs[3:0] to form the output Pixel_Mux[7:0] that selects one of the 16 colors of the CLUT. Base[7:4] is the base address of the CLUT. 16 CLUT of 16 colors can be selected with the window attributes.

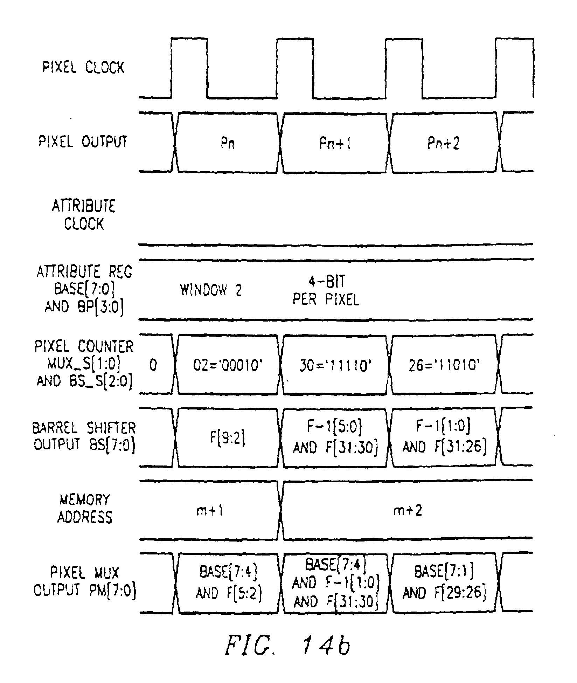

Figure 13 shows a specific case of the window 2 where Pn+1 has its 2 msb bits into the word m+1 and 2 lsb into m+2. Word m+2 is currently selected at the output of the fifo and the 7 lsb bits of word m+1 are maintained into the 7_bit register F-1[6:0]. Pixel selector takes F-1[1:0] concatenated with F[31:30] to generate Bs[3:0]. The corresponding timing is shown figure 14b. At Pn+1 pixel counter equals 30. The barrel shifter output generates F-1[5:0] concatenated with F[31:30]. The current fifo address is word m+2 and the Pixel_Mux output is Base[7:4] & F-1[1:0] & F[31:30]. Pixel Pn+2 the pixel counter is decremented by 4, the pixel selector selects the next 4_bits of word m+2.

### Window transition:

Figure 6 the window 1 is on top of window 2. The CAM of the window controller is loaded with window 1 attributes position on top of window 2. The window displayed on top has the lower indices. Pixel Pa is last pixel for this portion of window 2 into the frame memory, the next bits contain the code of color of window 1, the first bit is Pb. During the same line window 1 ends in Pc and window 2 restarts in Pd. Each of these window transitions are detected by the window controller that generates the attribute clock to change the current display attribute stored in a register (see timing figure 14a). For Pa-1 and Pa the Pixel counter is decremented by 4 each pixel and after attribute clock Bp[3:0]=1 (figure 8) decrements the counter by 1 each pixel.

### Graphic and Still video modes:

In bit-map mode the frame memory contains the code of the color, 1,2,4 or 8 bits per color depending of the attributes. The code of the color concatenated with the CLUT color base attribute selects a color from the CLUT. The CLUT contains 3 color components, one component for Luma and two components for Chroma.

When the current window is graphic, the CLUT is not used. Each pixel there are 3 accesses identical to the bit-map mode to extract the 3 colors components from the frame memory. There are 3 accesses during a pixel.

In still video picture the CLUT is not used. Still video reduces Chroma bandwidth. Each pixel there are 2 accesses identical to the bit-map mode to extract one Luma components and chroma component Cr or Cb alternately each pixel from the frame memory.

When the picture is empty the mode is bit-map with 0_bit per pixel. This mode is used to generate a window with a background color or a decimated motion video picture coming from the MPEG video decoder.

The pixel selector allows to mix by hardware different modes of display. The objective of this disclosure is to protect the pixel selector and multiplex hardware, its control, the window controller, window attribute generation and the flow of data from the frame memory to the Pixel_Mux output in the different display modes for different resolution.

The frame memory contains a description of the current displayed picture. The description is done sequentially starting from the first upper left corner of a window "n" to the last lower right corner of a window "m". Only the active windows need to be described, not the full screen, background color or motion video.

The description is done pixel per pixel, the number of bits to describe one pixel can vary for each window.

Each transition of window is indicated by the attributes of position stored into the CAM. The window controller selects the attribute of the corresponding window in real time during display.

The pixel selector selects the number of bits corresponding to the current pixel to be displayed.

The complementary bits to form the 8_bit pixel output are obtained by concatenation of selected data bits from the frame and window attribute from the attribute memory.

When the current window is bit-map Pixel_Mux output selects a color of the CLUT. The CLUT contains the 3 colors component.

When the current window is graphic, the CLUT is not used. Each pixel there are 3 accesses identical to the bit-map mode to extract the 3 colors components from the frame memory.

In still video picture the CLUT is not used. Each pixel there are 2 accesses identical to the bit-map mode to extract the 2 colors components from the frame memory. Luma is extracted each pixel and chroma component Cr and Cb alternately each pixel.

When the picture is empty the mode is bit-map with 0_bit per pixel. This mode is used to generate a window with a background color or a decimated motion video picture coming from the MPEG video decoder.

## Claims

1. An apparatus for providing pixel data for use in an on-screen display comprising:
a pixel memory for storing pixel data representative of pixels for use in producing the on-screen display;
a window controller having an input for receiving information indicative of a current pixel position in the on-screen display, said window controller responsive to said current pixel position information for providing window information indicative of an active window of the on-screen display in which the current pixel position is located;
**characterised by** comprising
an attribute indicator coupled to said window controller and responsive to said window information for providing information indicative of a data format used by said pixel memory to represent the pixels associated with said active window; and
a pixel selector coupled to said attribute indicator and said pixel memory, said pixel selector responsive to said data format information for obtaining from said pixel memory the pixel data associated with said active window.

2. The apparatus of Claim 1, wherein said window controller includes a prioritizer for selecting said active window from among a plurality of further active windows in which the current pixel position is also located.

3. The apparatus of Claim 1, wherein said attribute indicator includes an attribute memory for storing therein information indicative of a plurality of data formats used by said pixel memory to represent pixels of respective ones of a plurality of windows included in the on-screen display, wherein at least one of said plurality of data formats is different from at least another of said plurality of data formats, said window information including address information indicative of a location in said attribute memory where the data format information corresponding to said active window is stored.

4. The apparatus of Claim 3, wherein said window controller is responsive to said current pixel position information for detecting a condition in which said active window where the current pixel position is located is different from a window in which is located a pixel position that immediately precedes the current pixel position in a display line of the on-screen display, said window controller for providing a control signal in response to detection of said condition, said attribute indicator including an attribute register coupled to said attribute memory, said attribute register coupled to said window controller and responsive to said control signal for loading into said attribute register the data format associated with the pixels of said active window.

5. The apparatus of Claim 1, wherein said window controller includes a content addressable memory which contains information indicative of the respective sizes of a plurality of windows included in the on-screen display and indicative of the respective positions of said windows in the on-screen display.

6. The apparatus of Claim 1, wherein the data format information includes information indicative of a number of data bits per pixel used by said pixel memory to represent the pixels of said active window.

7. The apparatus of Claim 6, including a pixel counter coupled to said attribute indicator and said pixel selector, said pixel counter having an input for receiving a pixel clock, said pixel counter responsive to said pixel clock and said number of data bits per pixel for controlling said pixel selector to obtain from said pixel memory the pixel data associated with said active window.

8. The apparatus of Claim 1, wherein said attribute indicator is further for providing information for addressing a color look up table which includes colors for use in the on-screen display.

9. The apparatus of Claim 8, including a multiplexer coupled to said attribute indicator and said pixel selector, said multiplexer responsive to said data format information for combining, at an output thereof, pixel data obtained from said pixel memory and a portion of said color look up table addressing information.

10. A method of providing pixel data for use in an on-screen display comprising:
providing information indicative of a current pixel position in the on-screen display;
in response to said current pixel position information, providing window information indicative of an active window of the on-screen display in which the current pixel position is located;
**characterised by**
providing information indicative of a data format used by a pixel memory to represent pixels associated with said active window; and
responsive to said data format information, obtaining from the pixel memory pixel data associated with said active window.

11. The method of Claim 10, including selecting said active window from among a plurality of further active windows in which the current pixel position is also located.

12. The method of Claim 10, including storing in an attribute memory information indicative of a plurality of data formats used by the pixel memory to represent pixels of respective ones of a plurality of windows included in the on-screen display, wherein at least one of said plurality of data formats is different from at least another of said plurality of data formats, and wherein said window information includes address information indicative of a location in the attribute memory where the data format information corresponding to said active window is stored.

13. The method of Claim 12, including detecting in response to said current pixel position information a condition wherein said active window in which the current pixel position is located is different from a window in which is located a pixel position that immediately precedes the current pixel position in a display line of the on-screen display, providing a control signal in response to detection of said condition and, responsive to said control signal, loading into an attribute register the data format associated with the pixels of said active window.

14. The method of Claim 10, wherein said step of providing window information includes providing information indicative of the respective sizes of a plurality of windows included in the on-screen display and providing information indicative of the respective positions of said plurality of windows in the on-screen display.

15. The method of Claim 10, wherein the data format information includes information indicative of a number of data bits per pixel used by the pixel memory to represent the pixels of said active window.

16. The method of Claim 15, including providing a pixel clock, said obtaining step including obtaining the pixel data responsive to said pixel clock and said number of data bits per pixel.

17. The method of Claim 10, including providing information for addressing a color look up table which includes colors for use in the on-screen display and, responsive to said data format information, combining a portion of said color look up table addressing information with pixel data obtained from the pixel memory.

## Patentansprüche

1. Vorrichtung zum Bereitstellen von Bildelementdaten für die Verwendung in einer On-Screen-Anzeige, mit:
einem Bildelementspeicher zum Speichern von Bildelementdaten, die Bildelemente zur Verwendung bei der Erzeugung der On-Screen-Anzeige darstellen;
einer Fenstersteuereinheit, die einen Eingang besitzt, über den sie Informationen empfängt, die eine momentane Bildelementposition in der On-Screen-Anzeige angeben, und die in Reaktion auf die Informationen über die momentane Bildelementposition Fensterinformationen bereitstellt, die ein aktives Fenster der On-Screen-Anzeige angeben, in der sich die momentane Bildelementposition befindet;
**gekennzeichnet durch**
einen Attributanzeiger, der mit der Fenstersteuereinheit verbunden ist und in Reaktion auf die Fensterinformationen Informationen bereitstellt, die ein von dem Bildelementspeicher verwendetes Datenformat angeben, in dem die dem aktiven Fenster zugeordneten Bildelemente dargestellt werden; und
einer Bildelementauswahleinrichtung, die mit dem Attributanzeiger und mit dem Bildelementspeicher verbunden ist und in Reaktion auf die Datenformat-Informationen aus dem Bildelementspeicher diejenigen Bildelementdaten, die dem aktiven Fenster zugeordnet sind, erhält.

2. Vorrichtung nach Anspruch 1, bei der die Fenstersteuereinheit einen Prioritätszuteiler enthält, der das aktive Fenster aus mehreren weiteren aktiven Fenstern, in denen sich die momentane Bildelementposition ebenfalls befindet, auswählt.

3. Vorrichtung nach Anspruch 1, bei der der Attributanzeiger einen Attributspeicher enthält, in dem Informationen gespeichert sind, die mehrere Datenformate angeben, die von dem Bildelementspeicher verwendet werden, um Bildelemente von entsprechenden von mehreren Fenstern, die in der On-Screen-Anzeige enthalten sind, darzustellen, wobei wenigstens eines der mehreren Datenformate von wenigstens einem weiteren der mehreren Datenformate verschieden ist, wobei die Fensterinformationen Adresseninformationen enthalten, die einen Platz in dem Attributspeicher angeben, an dem die Datenformat-Informationen, die dem aktiven Fenster entsprechen, gespeichert sind.

4. Vorrichtung nach Anspruch 3, bei der die Fenstersteuereinheit in Reaktion auf die Informationen über die momentane Bildelementposition einen Zustand erfaßt, in dem das aktive Fenster, in dem sich die momentane Bildelementposition befindet, von einem Fenster, in dem sich eine Bildelementposition befindet, die der momentanen Bildelementposition in einer Anzeigezeile der On-Screen-Anzeige unmittelbar vorhergeht, verschieden ist, wobei die Fenstersteuereinheit in Reaktion auf die Erfassung dieses Zustandes ein Steuersignal bereitstellt, wobei der Attributanzeiger ein Attributregister enthält, das mit dem Attributspeicher verbunden ist, wobei das Attributregister mit der Fenstersteuereinheit verbunden ist und in Reaktion auf das Steuersignal das den Bildelementen des aktiven Fensters zugeordnete Datenformat in das Attributregister lädt.

5. Vorrichtung nach Anspruch 1, bei der die Fenstersteuereinheit einen inhaltsadressierbaren Speicher enthält, der Informationen enthält, die die jeweiligen Größen mehrerer Fenster, die in der On-Screen-Anzeige enthalten sind, angeben und die jeweiligen Positionen der Fenster in der On-Screen-Anzeige angeben.

6. Vorrichtung nach Anspruch 1, bei der die Datenformat-Informationen Informationen enthalten, die eine Anzahl von Datenbits pro Bildelement angeben, die vom Bildelementspeicher verwendet werden, um die Bildelemente des aktiven Fensters darzustellen.

7. Vorrichtung nach Anspruch 6, die einen Bildelementzähler enthält, der mit dem Attributanzeiger und mit der Bildelementauswahleinrichtung verbunden ist und einen Eingang besitzt, über den sie einen Bildelementtakt empfängt, wobei der Bildelementzähler in Reaktion auf den Bildelementtakt und die Anzahl von Datenbits pro Bildelement die Bildelementauswahleinrichtung steuert, um von dem Bildelementspeicher die dem aktiven Fenster zugeordneten Bildelementdaten zu erhalten.

8. Vorrichtung nach Anspruch 1, bei der der Attributanzeiger ferner dazu vorgesehen ist, Informationen für die Adressierung einer Farbnachschlagtabelle bereitzustellen, die Farben für die Verwendung in der On-Screen-Anzeige enthält.

9. Vorrichtung nach Anspruch 8, die einen mit dem Attributanzeiger und mit der Bildelementauswahleinrichtung verbundenen Multiplexer enthält, der in Reaktion auf die Datenformat-Informationen an einem Ausgang Bildelementdaten, die von dem Bildelementspeicher erhalten werden, mit einem Abschnitt von Farbnachschlagtabellen-Adressierungsinformationen kombiniert.

10. Verfahren zum Bereitstellen von Bildelementdaten für die Verwendung in einer On-Screen-Anzeige, bei dem:
Informationen bereitgestellt werden, die eine momentane Bildelementposition in der On-Screen-Anzeige angeben;
in Reaktion auf die Informationen über die momentane Bildelementposition Fensterinformationen bereitgestellt werden, die ein aktives Fenster der On-Screen-Anzeige angeben, in der sich die momentane Bildelementposition befindet;
**dadurch gekennzeichnet, daß**
Informationen bereitgestellt werden, die ein von einem Bildelementspeicher verwendetes Datenformat angeben, um Bildelemente, die dem aktiven Fenster zugeordnet sind, darzustellen; und
in Reaktion auf die Datenformat-Informationen von dem Bildelementspeicher Bildelementdaten erhalten werden, die dem aktiven Fenster zugeordnet sind.

11. Verfahren nach Anspruch 10, bei dem das aktive Fenster aus mehreren weiteren aktiven Fenstern, in denen sich die momentane Bildelementposition ebenfalls befindet, ausgewählt wird.

12. Verfahren nach Anspruch 10, bei dem in einem Attributspeicher Informationen gespeichert werden, die mehrere Datenformate angeben, die vom Bildelementspeicher verwendet werden, um Bildelemente entsprechender Fenster von mehreren Fenstern, die in der On-Screen-Anzeige enthalten sind, darzustellen, wobei wenigstens eines der mehreren Datenformate von wenigstens einem weiteren der mehreren Datenformate verschieden ist und wobei die Fensterinformationen Adresseninformationen enthalten, die einen Platz im Attributspeicher angeben, an dem die dem aktiven Fenster entsprechenden Datenformat-Informationen gespeichert sind.

13. Verfahren nach Anspruch 12, bei dem in Reaktion auf die Informationen über die momentane Bildelementposition ein Zustand erfaßt wird, in dem das aktive Fenster, in dem sich die momentane Bildelementposition befindet, von einem Fenster, in dem sich eine Bildelementposition befindet, die der momentanen Bildelementposition in einer Anzeigezeile der On-Screen-Anzeige unmittelbar vorhergeht, verschieden ist, in Reaktion auf die Erfassung dieses Zustandes ein Steuersignal bereitgestellt wird und in Reaktion auf das Steuersignal das den Bildelementen des aktiven Fensters zugeordnete Datenformat in ein Attributregister geladen wird.

14. Verfahren nach Anspruch 10, bei dem in dem Schritt, bei dem Fensterinformationen bereitgestellt werden, Informationen bereitgestellt werden, die die jeweiligen Größen mehrerer Fenster, die in der On-Screen-Anzeige enthalten sind, angeben, und Informationen bereitgestellt werden, die die jeweiligen Positionen der mehreren Fenster in der On-Screen-Anzeige angeben.

15. Verfahren nach Anspruch 10, bei dem die Datenformat-Informationen Informationen enthalten, die eine Anzahl von Datenbits pro Bildelement angeben, die von dem Bildelementspeicher verwendet werden, um die Bildelemente des aktiven Fensters darzustellen.

16. Verfahren nach Anspruch 15, bei dem ein Bildelementtakt bereitgestellt wird, wobei in dem Schritt des Erhaltens die Bildelementdaten in Reaktion auf den Bildelementtakt und auf die Anzahl von Datenbits pro Bildelement erhalten werden.

17. Verfahren nach Anspruch 10, bei dem Informationen über die Adressierung einer Farbnachschlagtabelle, die Farben für die Verwendung in der On-Screen-Anzeige enthält, bereitgestellt werden und bei dem in Reaktion auf die Datenformat-Informationen ein Abschnitt von Farbnachschlagtabellen-Adressierungsinformationen mit Bildelementdaten, die vom Bildelementspeicher erhalten werden, kombiniert wird.

## Revendications

1. Appareil permettant de fournir des données de pixels pour une utilisation dans un affichage sur un écran comprenant :
une mémoire de pixels afin de stocker des données de pixels représentatives des pixels pour une utilisation dans la production de l'affichage sur l'écran ;
un contrôleur de fenêtre ayant une entrée afin de recevoir des informations indicatives d'une position actuelle de pixel dans l'affichage sur l'écran, ledit contrôleur de fenêtre répondant auxdites informations de position actuelle de pixel afin de fournir des informations de fenêtre indicatives d'une fenêtre active de l'affichage sur l'écran dans laquelle se situe la position actuelle du pixel ;
**caractérisé par** le fait de comprendre :
un indicateur d'attribut couplé audit contrôleur de fenêtre et répondant aux dites informations de fenêtre afin de fournir des informations indicatives d'un format de données utilisées par ladite mémoire de pixel afin de représenter les pixels associés à ladite fenêtre active ; et
un sélecteur de pixels couplé audit indicateur d'attribut et à ladite mémoire de pixels, ledit sélecteur de pixels répondant auxdites informations de format de données pour obtenir à partir de ladite mémoire de pixels les données de pixels associées à ladite fenêtre active.

2. Appareil selon la revendication 1, dans lequel ledit contrôleur de fenêtre inclut un dispositif de priorité qui permet de choisir ladite fenêtre active à partir d'une pluralité d'autres fenêtres actives dans lesquelles la position actuelle du pixel est également située.

3. Appareil selon la revendication 1, dans lequel ledit indicateur d'attribut inclut une mémoire d'attribut permettant d'y stocker des informations indicatives d'une pluralité de formats de données utilisée par ladite mémoire de pixels afin de représenter des pixels de fenêtres respectives parmi une pluralité de fenêtres incluses dans l'affichage sur l'écran, dans lequel au moins un format de ladite pluralité de formats de données est différent d'au moins un autre format de ladite pluralité de formats de données, lesdites informations de fenêtre comprenant des informations d'adresse indicatives d'un emplacement dans ladite mémoire d'attribut où les informations de format de données correspondant à ladite fenêtre active sont stockées.

4. Appareil selon la revendication 3, dans lequel ledit contrôleur de fenêtre répond auxdites informations de position actuelles de pixel afin de détecter une condition, dans laquelle ladite fenêtre active où se situe la position actuelle du pixel, est différente d'une fenêtre dans laquelle se trouve une position de pixel qui précède immédiatement la position actuelle du pixel dans une ligne d'affichage de l'affichage sur l'écran, ledit contrôleur de fenêtre permettant de fournir un signal de commande en réponse à la détection de ladite condition, ledit indicateur d'attribut comprenant un registre d'attribut couplé à ladite mémoire d'attribut, ledit registre d'attribut couplé audit contrôleur de fenêtre et répondant audit signal de commande afin de charger dans ledit registre d'attribut le format de données associé aux pixels de ladite fenêtre active.

5. Appareil selon la revendication 1, dans lequel ledit contrôleur de fenêtre inclut une mémoire adressable par le contenu qui contient des informations indicatives des dimensions respectives d'une pluralité de fenêtres incluses dans l'affichage sur l'écran et indicatives des positions respectives desdites fenêtres dans l'affichage sur l'écran.

6. Appareil selon la revendication 1, dans lequel les informations de format de données incluent des informations indicatives d'un certain nombre de bits de données par pixel utilisés par ladite mémoire de pixels afin de représenter les pixels de ladite fenêtre active.

7. Appareil selon la revendication 6, incluant un compteur de pixels couplé audit indicateur d'attribut et audit sélecteur de pixels, ledit compteur de pixels ayant une entrée permettant de recevoir une horloge de pixels, ledit compteur de pixels répondant à ladite horloge de pixels et audit nombre de bits de données par pixel afin de commander ledit sélecteur de pixels afin d'obtenir de ladite mémoire de pixels les données de pixels associées à ladite fenêtre active.

8. Appareil selon la revendication 1, dans lequel ledit indicateur d'attribut permet de plus de fournir des informations pour adresser une table de correspondance des couleurs qui inclut les couleurs destinées à être utilisées dans l'affichage sur l'écran.

9. Appareil selon la revendication 8, incluant un multiplexeur couplé audit indicateur d'attribut et audit sélecteur de pixels, ledit multiplexeur répondant auxdites informations de format de données afin de combiner, à sa sortie, les données de pixels obtenues à partir de ladite mémoire de pixels et d'une partie des informations d'adressage de ladite table de correspondance des couleurs.

10. Procédé permettant de fournir des données de pixels destinées à être utilisées dans un affichage sur un écran comprenant :
la fourniture d'informations indicatives de la position actuelle d'un pixel dans l'affichage sur l'écran ;
en réponse auxdites informations de la position actuelle du pixel, la fourniture des informations de fenêtre indicatives d'une fenêtre active de l'affichage sur l'écran dans laquelle se situe la position actuelle du pixel ;
**caractérisé par** :
la fourniture des informations indicatives d'un format de données utilisées par une mémoire de pixels afin de représenter les pixels associés à ladite fenêtre active ; et
en réponse auxdites informations de format de données, l'obtention des données de pixels associées à ladite fenêtre active, à partir de la mémoire de pixels.

11. Procédé selon la revendication 10, incluant la sélection de ladite fenêtre active à partir d'une pluralité d'autres fenêtres actives dans lesquelles la position actuelle du pixel est également située.

12. Procédé selon la revendication 10, incluant le stockage dans une mémoire d'attribut d'informations indicatives d'une pluralité de formats de données utilisée par la mémoire de pixels afin de représenter des pixels de fenêtres respectives parmi une pluralité de fenêtres incluses dans l'affichage sur l'écran, dans lequel au moins un format de ladite pluralité de formats de données est différent d'au moins un autre format de ladite pluralité de formats de données, et dans lequel lesdites informations de fenêtre comprennent des informations d'adresse indicatives d'un emplacement dans la mémoire d'attribut où les informations de format de données correspondant à ladite fenêtre active sont stockées.

13. Procédé selon la revendication 12, incluant la détection en réponse auxdites informations de position actuelles du pixel, d'une condition dans laquelle ladite fenêtre active, dans laquelle se situe la position actuelle du pixel est différente d'une fenêtre dans laquelle se situe une position de pixel qui précède immédiatement la position actuelle du pixel dans une ligne d'affichage de l'affichage sur l'écran, fournissant un signal de commande en réponse à la détection de ladite condition et, en réponse audit signal de commande, le chargement dans un registre d'attribut du format de données associé aux pixels de ladite fenêtre active.

14. Procédé selon la revendication 10, dans lequel ladite étape de fourniture d'informations de fenêtre inclut la fourniture d'informations indicatives des dimensions respectives d'une pluralité de fenêtres incluses dans l'affichage sur l'écran et la fourniture d'informations indicatives des positions respectives de ladite pluralité de fenêtres dans l'affichage sur l'écran.

15. Procédé selon la revendication 10, dans lequel les informations de format de données incluent des informations indicatives d'un certain nombre de bits de données par pixel utilisés par la mémoire de pixels afin de représenter les pixels de ladite fenêtre active.

16. Procédé selon la revendication 15, incluant la fourniture d'une horloge de pixel, ladite étape d'obtention comprenant des données de pixels répondant à ladite horloge de pixels et audit nombre de bits de données par pixel.

17. Procédé selon la revendication 10, incluant la fourniture d'informations permettant d'adresser une table de correspondance des couleurs qui inclut des couleurs destinées à être utilisées dans l'affichage sur l'écran et, en réponse auxdites informations de format de données, la combinaison d'une partie des informations d'adressage de ladite table de correspondance des couleurs avec les données de pixels obtenues à partir de la mémoire de pixels.
